# EUROPÄISCHE PATENTSCHRIFT

(11) **EP 0 631 732 B1**
(45) Veröffentlichungstag und Bekanntmachung des Hinweises auf die Patenterteilung: **18.01.1995**
(21) Anmeldenummer: 93112022.4
(22) Anmeldetag: 28.07.1993
(51) Int. Cl.: A23L 1/317

(54) **Brühwurst, insbesondere Brühwürstchen und Verfahren zu ihrer bzw. seiner Herstellung**
Broiled sausage, in particular little broiled sausages and process to prepare them
Saucisse bouillie, en particulier des petites saucisses bouillies et procédé pour leur préparation

(43) Veröffentlichungstag der Anmeldung: 04.01.1995
(73) Patentinhaber: PLUMROSE-BÖKLUNDER GmbH & CO., 24860 Böklund (DE)
(72) Erfinder: Scheuber, Kuno, D-24852 Eggebek (DE)
(74) Vertreter: Fleck, Thomas, Dr. Dipl.-Chem.

(56) Entgegenhaltungen:
- DE-A- 2 937 808
- DE-A- 3 839 255

## Beschreibung

Die Erfindung bezieht sich auf Brühwurst, insbesondere Brühwürstchen, umfassend zerkleinertes Fleisch, Fettgewebe oder Speck, Salz, Gewürze, Rauch und Trinkwasser in einer essbaren Hülle, sowie ein entsprechendes Herstellungsverfahren.

Brühwurst und auch deren in Hüllen geringeren Kalibers gefüllte Brühwürstchen, stellen eine Wurstware dar, die nach dem Stand der Technik aus rohem Skelettmuskelfleisch (Schweine- und/oder Rindfleisch), Fettgewebe (Speck), Salzen und Gewürzen sowie Rauch, hitzebehandelt durch Brühen, Backen, Braten oder auf andere Weise, häufig geräuchert, hergestellt wird. Das Fleisch wird durch Zerkleinerung unter Einwirkung von zugesetztem Kochsalz oder Nitritpökelsalz und ggf. weiterer Kuttersalze, meist unter Zugabe von Trinkwasser (auch als Eis) ganz oder teilweise aufgeschlossen. Das Muskeleiweiss wird durch Hitzebehandlung mehr oder weniger zusammenhängend koaguliert. Die Masse bleibt bei erneutem Erhitzen schnittfest.

Ferner sind den meisten auf dem Markt befindlichen Brühwürsten und Brühwürstchen Konservierungsstoffe, beispielsweise E 250, sowie Geschmacksverstärker (E 621) und Stabilisatoren (E 331) und Antioxidationsmittel zugesetzt. Darüberhinaus finden auch noch Ascorbinsäure (E 300) sowie Natriumcitrat und Natriumascorbat Verwendung. Auch sind schon verschiedene Zuckerstoffe bekannten Rezepturen zugesetzt worden.
Normale Würstchen besitzen einen Fettgehalt von ca. 19 - 25 %, bei einem Salzgehalt von 1,9 - 2 Gew%.

Ferner ist im Bereich der Lebensmittel schon jodiertes Speisesalz eingesetzt worden, bei dem es sich um ein Diätsalz zur Steigerung der Jodzufuhr handelt. Durch Zusatz von Natrium-, Kalium- oder Kalziumjodid muß das Salz (einschließlich des natürlichen Gehaltes) einen Jodgehalt von 3 bis 5 mg Jod/kg enthalten. In medizinischer Hinsicht ist die positive Wirkung des jodierten Speisesalzes im Schilddrüsenbereich bekannt.

Darüberhinaus ist Honig als Speisehonig sowie Back- und Industriehonig bekannt. Er besteht hauptsächlich aus Invertzucker (Glucose und Fructose), Wasser und Dextrine, sowie Pollenkörner und Enzymen.
Die Bedeutung des Honigs als Nahrungs-, Genuß- und Heilmittel beruht in der Hauptsache auf seinem Gehalt an leicht resorbierbaren Kohlehydraten, an appetitanregenden, aromatischen Substanzen und an den Mineralbestandteilen und Spurenstoffen, von denen Kalzium, Magnesium, Eisen, Mangan, Phosphor, Silizium, Kupfer und Nickel in fast allen Honigsorten vorkommen. In der Medizin dient Honig wegen seines hohen Nährwertes als Kräftigungsmittel für Genesende. Bei schwer heilenden Wunden wirkt Honich entzündungshemmend, ebenso bei Bronchialkatarrh. In medizinischer Hinsicht von besonderer Bedeutung ist das Vorkommen von Acetylcholin in Honig, ein Stoff, der als cholinergischer Faktor blutdrucksenkend und anregend auf die Magen- und Darmtätigkeit wirkt. Seine unmittelbare Herzwirkung soll auf der Wiederherstellung des Herzmuskelstoffwechsels oder einer Wiederauffüllung der Energiereserven des Herzmuskels beruhen. Ferner ist der Honig bewährt in der Leberdiät und insbesondere bei chronischen Leberkrankheiten.

Der Wert des Honigs als Nahrungs-, Genuß- und Heilmittel ist somit unumstritten, und die steigenden Produktionszahlen an Honig in den letzten Jahren zeigen, daß der Verbrauch an Honig konstant zugenommen hat. Auch ist Honig schon im Zusammenhang mit Schinken verwendet worden. In praktischer und tatsächlicher Hinsicht lassen sich Schinken und Brühwürstchen überhaupt nicht vergleichen.

Die Verbraucher stehen heutzutage den von ihnen zu verzehrenden Lebensmitteln in jeder Weise kritisch gegenüber und achten insbesondere auf die Zusammensetzung des jeweiligen Produktes, wozu der Gesetzgeber in den meisten Fällen auch schon eine Deklarationspflicht vorgesehen hat, an der sich der Verbraucher gern orientiert. Auch ist es gerade bei Kindern und Jugendlichen, die noch dem Wachstum unterliegen, besonders wichtig, daß sie eine ausgewogene Nahrung mit wertvollen Bestandteilen erhalten, die auf unnötige Füll- und Zusatzstoffe verzichtet.

Der Erfindung liegt deshalb die Aufgabe zugrunde, die eingangs genannte Brühwurst, und insbesondere auch Brühwürstchen, derart zu verbessern, daß sie preiswert unter Verzicht auf Nitritpökelsalz, Kuttersalze, Emulgatoren, Stabilisatoren, Geschmacksverstärker, Antioxidationsmittel hergestellt werden kann und trotzdem hinsichtlich Aussehen und Geschmack ansprechend ist.

Diese Aufgabe wird durch die im Anspruch 1 gekennzeichnete Brühwurst(chen) gelöst, die zudem als besonders Verbraucher- und gesundheitsfreundlich und "chemiefrei" bezeichnet werden können.

Erfindungsgemäß enthält diese also jodiertes Salz und Honig, während die anderen üblicherweise verwendeten Bestandteile wie Nitritpökelsalz, Kuttersalze, Emulgatoren, Stabilisatoren, Geschmacksverstärker und Antioxidationsmittel fehlen.

Überraschenderweise führt die erfindungsgemäße Zusammensetzung der Brühwurst/Brühwürstchen mit der Kombination von jodiertem Salz und Honig, insbesondere Speisehonig, zu einem synergistischen Effekt, der sich u.U. auf die Wirkung von Honig und seiner Enzyme in Verbindung mit der (Schweine-)Fleisch-Emulgiervorgang-, Temperatur- und Prozeßzeit in der Rauchanlage zurückführen lässt. Der Honig hat dabei eine ähnliche Wirkung auf das (Schweine-)Fleisch wie Nitrit. Ein weiterer, glücklicher Umstand ist, daß der Honig ein sehr guter Ersatz für sämtliche Bindehilfsstoffe ist, z.B. Natriumcitrat, Milcheiweiß und dergleichen mehr.
Gleichzeitig enthält Honig in Spuren Ascorbinsäure von der Natur her, so daß auch diese als gesonderte Zutat entfallen kann.

Vorteilhafterweise besitzt das erfindungsgemässe Brühwürstchen ebenfalls einen reduzierten Anteil an jodiertem Speisesalz.

Das erfindungsgemässe Herstellungsverfahren läuft im wesentlichen wie folgt ab:
Das standardisierte Fleisch, z.B. Schwein efleisch, wird mit einer 8mm Wolfsscheibe zerkleinert. Nach der Zerkleinerung kommt das Fleisch in einen Mischer, die übrigen Zutaten wie Trinkwasser, Honig, jodiertes Speisesalz und Gewürzmischung, werden ebenfalls in den Mischer gegeben und programmiert, im Vor- und Rücklauf 15 Minuten gemischt. Danach wird das Vorbrät in eine Mikrokutterdoppelzerkleinerungsmaschine gepumpt. Bei diesem Durchlauf entsteht das emulgierte Brät. Die Temperatur darf am Endauslauf nicht höher als 12° und nicht kälter als 10°C sein. Danach wird das Brät in Zellulosedärme gefüllt, Kettengröße: 40,0, Darmkaliber: 15 mm, Spritzgewicht: 7,3 g und automatisch mittels Durchlaufrauchanlage getrocknet, geräuchert, gebrüht, Kerntemperatur 78°, und sofort wieder runtergekühlt auf 0 - 2°C. Danach wird das Würstchen gepeelt. Nach Entfernung der Zellulosehülle werden die Würstchen in Gläser gefüllt (48 Stück) und mit 50° heißem Wasser aufgefüllt mit 5 mm Kopfraum. Die Gläser werden einer Gläserverschließanlage zugeführt und mit einem TO-Deckel vakuumverschlossen. Danach erfolgt die Sterilisation mit Rotationsverfahren bei 112° Kerntemperatur. Sofort nach Erreichung des F-Wertes wird die Kühlphase eingeleitet. Sobald die Gläser auf etwa 8° heruntergekühlt sind, werden sie aus dem Autoklav genommen und die Etikettierung /Verpackung durchgeführt.

Ein bevorzugtes Beispiel für eine erfindungsgemässe Rezeptur eines Brühwürstchens, das beispielsweise als Cocktailwürstchen oder als Kinderpartywürstchen verwendet werden kann, wird nachfolgend angegeben, ohne hierauf beschränkt zu sein:

### Rezeptur in Prozenten:

73 % Schweinefleisch
21,7 % Trinkwasser (Eis)
3,0 % Bienenhonig
1,4 % jodiertes Speisesalz
0,9 % Gewürzmischung.

## Patentansprüche

1. Brühwurst, insbesondere Brühwürstchen, umfassend zerkleinertes Fleisch, Fettgewebe und/oder Speck, Salz, Gewürze, Rauch und Trinkwasser in einer essbaren Hülle, gekennzeichnet durch jodiertes Salz und Honig, unter Verzicht auf Nitritpökelsalz, Kuttersalze, Emulgatoren, Geschmacksverstärker, Stabilisatoren, Antioxidationsmittel.

2. Brühwurst, insbesondere Brühwürstchen, nach Anspruch 1, umfassend zerkleinertes Fleisch, Fettgewebe und/oder Speck, Salz, Gewürze, Rauch und Trinkwasser in einer essbaren Hülle, gekennzeichnet durch 1,2 Gew%. bis 1,6 Gew%. jodiertes Salz und 2,5 Gew%. bis 3,5 Gew%. Honig, unter Verzicht auf Nitritpökelsalz, Kuttersalze, Emulgatoren, Geschmacksverstärker, Stabilisatoren, Antioxidationsmittel.

3. Brühwurst nach Anspruch 1 und 2, dadurch gekennzeichnet, daß als Speisehonig Bienenhonig eingesetzt wird.

4. Brühwurst nach Anspruch 1 bis 3, dadurch gekennzeichnet, daß der Gesamtfettanteil maximal 15 Gew%, insbesondere 12 Gew% beträgt.

5. Verfahren zum Herstellen der Brühwurst, insbesondere Brühwürstchen nach Anspruch 1, gekennzeichnet durch folgende Stufen:
a) Mischen der Zutaten unter Erzeugung des Vorbrätes;
b) Zerkleinern bis zur homogenisierten Masse unter Erzeugung des emulgierten Brätes, wobei im Endauslauf der Zerkleinerungsmaschine eine Temperatur im Bereich von 10 bis 12°C erhalten wird.
c) Abfüllen des Brätes in Zellulosedärme.
d) Trocknen, Räuchern, Brühen in einer Durchlaufrauchanlage bei einer Temperatur im Bereich von ca. 75 - 80°C, insbesondere 78°C,
e) anschliessendes Abkühlen auf ca. 0 - 2°C,
f) Entfernen des Zellulosehülle und
g) Abfüllen derselben in Gläser mit ca. 50° heißem Wasser und Verschliessen der Gläser
h) Sterilisation mittels Rotation bei Temperaturen >100°C, insbesondere 112°C Kerntemperatur.

## Claims

1. Broiled sausage, particularly small broiled sausages, incorporating minced meat, adipose tissue and/or lard, salt, seasoning, smoked and drinking water in an edible casing, characterized by iodized salt and honey, whilst not using nitrite pickling salt, rock salts, emulsifiers, taste intensifiers, stabilizers and antioxidants.

2. Broiled sausage, particularly small broiled sausages according to claim 1, incorporating minced meat, adipose tissue and/or lard, salt, seasoning, smoked and drinking water in an edible casing, characterized by 1.2 to 1.6% by weight iodized salt and 2.5 to 3.5% by weight honey, whilst not using nitrate pickling salt, rock salts, emulsifiers, taste intensifiers, stabilizers and antioxidants.

3. Broiled sausage according to claim 1 and 2, characterized in that bees honey is used as edible honey.

4. Broiled sausage according to claims 1 to 3, characterized in that the total fat proportion is max. 15 and in particular 12% by weight.

5. Process for the production of broiled sausage, particularly small broiled sausages according to claim 1, characterized by the following stages:
a) mixing the ingredients and producing a preliminary product,
b) mincing to give a homogenized mass and producing the emulsified product, a temperature in the range 10 to 12°C being reached in the outlet from the mincing machine,
c) filling the product into cellulose casings,
d) drying, smoking, broiling in a continuous smoking installation at a temperature in the range approximately 75 to 80°C and in particular 78°C,
e) subsequent cooling to approximately 0 to 2°C,
f) removing the cellulose casing and
g) filling the same into jars with approximately 50°C hot water and sealing the jars,
h) sterilizing by rotating at temperatures of >100°C with in particular a core temperature of 112°C.

## Revendications

1. La saucisse pochée - notamment les petites saucisses pochées - composée de viande hachée, de graisse et/ou de lard, de sel, d'épices, de fumée et d'eau potable, le tout placé dans une poche comestible ; caractérisée par l'adjonction de sel iodé et de miel, mais ne contenant pas de sel nitrité, pas de sels ajouté dans l'émulsionneur à cutters, pas d'émusifiants, pas d'exhausteurs de goût, pas de stabilisants et pas d'antioxydants.

2. La saucisse pochée - notamment les petites saucisses pochées - selon la revendication 1, composée de viande hachée, de graisse et/ou de lard, de sel, d'épices, de fumée et d'eau potable, le tout placé dans une poche comestible ; caractérisée par l'adjonction de 1,2 à 1,6 % en poids de sel iodé et de 2,5 à 3,5 % en poids de miel, mais ne contenant pas de sel nitrité, pas de sels ajoutés dans l'émulsionneur à cutters, pas d'émulsifiants, pas d'exhausteurs de goût, pas de stabilisants et pas d'antioxydants.

3. La saucisse pochée selon les revendications 1 et 2, caractérisée par l'adjonction de miel d'abeilles en tant que miel alimentaire.

4. La saucisse pochée selon les revendications 1 à 3, caractérisée par une proportion totale de graisse de 15 % maximum en poids, spécialement 12 % en poids.

5. Procédé de fabrication de la saucisse pochée, notamment les petites saucisses selon la revendication 1 ; caractérisée par les étapes suivantes :
a) mélange des ingrédients en vue de l'obtention de la farce de départ ;
b) hachage jusqu'à ce que la masse devienne homogène en vue de l'obtention de la farce émulsionnée avant cuisson, ce faisant la température atteinte au moment de la sortie finale du hachoir est comprise entre 10 et 12°C ;
c) introduction de la farce avant cuisson dans des boyaux de cellulose;
d) séchage, fumage et pochage dans une installation de fumage en continu à une température comprise entre env. 75 et 80°C, spécialement 78°C ; puis
e) refroidissement à 0 - 2°C,
f) élimination de la poche de cellulose et
g) introduction du même mélange dans des bocaux avec de l'eau à env. 50°, et fermeture des bocaux;
h) stérilisation par rotation à des températures > 100°C, spécialement à une température centrale de 112°C.
